# EUROPEAN PATENT SPECIFICATION

(11) **EP 3 704 565 B1**
(45) Date of publication and mention of the grant of the patent: **27.04.2022**
(21) Application number: 18825799.2
(22) Date of filing: 30.10.2018
(51) Int. Cl.: G06F 3/01, G01C 15/00, B63B 27/00, G02B 27/01, B63B 25/00, E04B 1/35, B63B 25/28, G06T 19/00, B63B 35/00

(54) **METHOD FOR VISUALIZING A 2D TECHNICAL DRAWING ON A PHYSICAL SURFACE OF A VESSEL**
VERFAHREN ZUR VISUALISIERUNG EINER TECHNISCHEN 2D-ZEICHNUNG AUF EINER PHYSISCHEN OBERFLÄCHE EINES SCHIFFS
PROCÉDÉ DE VISUALISATION D'UN DESSIN TECHNIQUE 2D SUR UNE SURFACE PHYSIQUE D'UN VAISSEAU

(30) Priority: 30.10.2017 NL 2019827
(43) Date of publication of application: 09.09.2020
(73) Proprietor: Jumbo Maritime B.V., 3115 HC Schiedam (NL)
(72) Inventor: VERBURG, Sijke Anita, 3115 HC Schiedam (NL)
(74) Representative: Algemeen Octrooi- en Merkenbureau B.V.
(86) International application number: PCT/NL2018/050719
(87) International publication number: WO 2019/088827

(56) References cited:
- WO-A1-2017/220967
- ES-A1- 2 302 399
- US-A- 2 358 596
- US-A- 5 751 576
- US-A1- 2013 180 442
- US-A1- 2017 018 120
- US-B1- 9 460 561

## Description

### FIELD OF THE INVENTION

The present invention relates to a method for deck marking.

### BACKGROUND OF THE INVENTION

In many fields, and particularly in engineering, visualizing a 2D technical drawing on a physical surface, such as a landscape surface, a construction (in general), a foundation of a building to be built, et cetera, is hard and relies mainly on the imagination of the respective engineer, designer, architect, et cetera, to successfully accomplish.

For instance, US 6.094.625 A discloses methods and apparatus which enable use of augmented vision in survey procedures and related work. Virtual objects are presented to an operator on a see through display, wherein some of the objects correspond with real objects in the operators field of view at any instant and others may provide interactive functions for the operator. The operator eye positions are determined using measurements from a remote positioning system such as GPS, an operator head orientation sensing system, and knowledge of head geometry. Positions and attributes of real objects are stored in a database memory carried by the operator. The operators field of view is continuously determined and images of the real objects are generated from database information by a rendering system. The images are presented on the see through display as virtual objects and numerous functions may be provided for the operator using virtual interactive objects, depending on the work at hand.

EP 1.980.999 A1 furthermore discloses an augmented reality image system for composing an augmented reality image by superposing a virtual image over a reality image. The virtual image is constructed in dependence of a position and orientation of a user's head relative to a reality image field of view. The system comprises at least two separate localization systems for determining the relative position and orientation of the user's head.

US 2016/0004305 A1 for example discloses a system for displaying information to an operator of a machine comprises a head tracking system and a projection system. One system for displaying information uses a projection system and a see-through display to present two-dimensional images to an operator. One system uses a projection system and a see-through display to present three-dimensional images to an operator. One system uses a pair of smart glasses to display information to a user based a direction a user is looking.

ES 2 302 399 A1 relates to a method and system for applying augmented reality for construction stakeout and monitoring work. In an embodiment, building plans are displayed on a augmented reality glasses, such that elements of architectural drawings or building plans are displayed superimposed on the real environment.

US 5 751 576 A relates to an animated map display method which provides a visual representation of selected data and information relating to an agronomic application system in substantially real-time as an application vehicle traverses a field, and a heads-up display apparatus that permits the animated map display to be projected and overlaid on the real-world image of the terrain and field viewed by an operator from the cab of the vehicle.

US 9,460,561 B1 relates to augmented reality, and more specifically, to techniques for displaying a 2-D drawing in a user-understandable manner within an augmented reality view.

It is even harder to visualize the content of a 2D technical drawing on a physical surface, when a high degree of accuracy is required. In particular in the shipping industry, more in particular in the heavy shipping industry, where heavy and bulky loads are to be transported from a first location to a second location, a high degree of accuracy is required with respect to the positioning of such loads, in particular when such loads are to be arranged on the deck of the transport vessel.

US 2013/180442 A1 discloses a system for handling of a great variety of cargo by means of a trolley. In an embodiment, the trolley is adapted for fully automatic, semi-automatic or manual control. In an embodiment, the trolley includes a number of sensors adapted to read markings on the deck. The markings may be mechanical, optical or magnetic, e.g., as labels put on the deck. The trolley may then navigate its way through the vessel using these markings.

The proper arrangement of such loads on the deck is achieved by creating a 2D technical drawing of the deck of the vessel with the loads being drawn on the deck. A so-called port captain will then receive a printout of the 2D technical drawing and will manually convert (in the sense of visualizing) the printed lines representing the footprint of the loads on the deck to self-drawn reference marks on the deck. This process is called "deck marking".

This manual method of deck marking, i.e. the rather manual method of visualizing, usually including measuring dimensions on the printout and drawing them on the deck, however, is a time-consuming process and is not user-friendly. Furthermore, the risk of incorrect marking being provided by the port captain is relatively high. Also, the respective vessel can often not be used for commercial purposes during the deck marking process.

### OBJECT OF THE INVENTION

An object of the invention is therefore to provide a method for deck marking, wherein the visualization of the 2D technical drawing onto the physical surface is a less time-consuming process.

Another object of the invention is to provide a method for deck marking, wherein the risk of incorrectly and/or inaccurately visualizing the 2D technical drawing onto the physical surface, such as the deck of a vessel, is reduced. In this respect, it is worthwhile to know that with deck marking, the acceptance range for the accuracy of the deck marks is 10 mm, but is preferred to be (less than) 5 mm.

Yet another object of the invention is to provide a method for deck marking, wherein the time consumed by the visualization process is reduced.

### DESCRIPTION OF THE INVENTION

Hereto, the method according to claim 1 is provided.

The Applicant has found that the aforementioned method allows for accurate, correct visualizing of the 2D technical drawing on a physical surface, wherein the time needed to complete the visualization is vastly reduced. Furthermore, the method is far more user-friendly.

Mixed reality devices as such are known in the market and allow the wearer of the device to view a physical world through a viewing screen, such as a pair of glasses, with a virtual world or aspects thereof being projected onto the viewing screen, such that a combined, 'mixed reality' world is seen by the wearer. An example of such a mixed reality device is the Microsoft HoloLens. Currently, applications are being developed to showcase the capabilities of such mixed reality devices.

However, apart from recreational use or 'demonstrational' use, the use of such mixed reality devices for displaying high-accuracy, 2D technical drawings or engineering drawings on the viewing screen, such that the resulting combination of the 2D technical drawing and a physical surface upon which the drawing is projected can be viewed by the wearer, is relatively unknown or uncommon.

It should be understood that, within the context of this patent application, a 2D technical drawing is to be interpreted as a technical or engineering drawing with a relatively high degree of detail and accuracy/precision, for instance a CAD drawing, such as an AutoCAD drawing, or a 2D technical drawing extracted from CAD. The Applicant, for instance, does not consider a rough sketch or crude image to be a 2D technical drawing.

An embodiment relates to an aforementioned method, wherein the physical surface is a substantially horizontal surface. Thus, the wearer of the mixed reality device is able to walk around on the surface, have a closer look at certain parts of the visualization, and is conveniently allowed for instance to place (physical markers) on the horizontal surface, wherein the physical markers can then be processed again by the mixed reality device for purposes such as correct positioning of the 2D technical drawing, adjustment of the 2D technical drawing, et cetera. Alternatively, the physical surface could of course also comprise a vertical surface, or any other (angled) surface. Physical markers can then be arranged on the vertical (or horizontal or angled) surface by any appropriate means, such as magnets in case of a metal surface.

In the aforementioned method, the physical surface is a deck and/or hold of a vessel. As mentioned before, the Applicant foresees a particularly advantageous application of the method for use with deck marking. In an example not falling within the scope of the claims, the physical surface could be formed by any other part of the vessel, such as a wall.

According to the invention, the 2D drawing is a technical drawing comprising a virtual footprint of one or more loads to be transported on the deck and/or in the hold of the vessel. The virtual footprint is then directly projected onto the physical deck surface or the respective hold surface on the viewing screen, which, as mentioned before, has many advantages.

According to the invention, the virtual footprint of the one or more loads is displayed on the viewing screen in such a way, that a wearer of the mixed reality device sees the deck surface and/or hold surface with the virtual footprint of the one or more loads being orthographically projected onto the physical surface, wherein the wearer of the mixed reality device is enabled to draw characteristic lines and reference points of the virtual footprint of the one or more loads on the deck surface and/or hold surface. As opposed to the prior art manual method, the above method leads to major time and cost savings.

An embodiment relates to an aforementioned method, wherein at least two physical marker elements are arranged on the physical surface, preferably by the wearer of the mixed reality device, corresponding with at least two associated virtual reference points of the 2D drawing, in order to orthographically project the 2D drawing on the viewing screen with correct positioning and orientation with respect to the physical surface. When the method is used with deck marking, preferably the physical marker elements correspond with the (at least two, preferably at least three) corners of a hatch cover and/or tank top (which usually comprises no corners, but, nevertheless, has other useful reference points which then need be utilized). The physical marker elements could for instance comprise a disk, plate or other object that is easily identifiable by the mixed reality device. Preferably, the physical marker element has high-contrast colours or provides good contrast with the environment in which it will be used, such that it can be easily recognized by the mixed reality device.

An embodiment relates to an aforementioned method, wherein the mixed reality device is worn, or at least configured to be worn, by a crew member of the vessel or a port captain. The mixed reality device is then preferably adapted to withstand a vessel's usual operating environment, such as at sea or in a port, and/or to withstand rough handling et cetera. Preferably, the mixed reality device is provided with means (such as a wireless receiver) such that the 2D technical drawing can be uploaded wirelessly, preferably over a long distance. However, the Applicant prefers that the mixed reality device is also able to operate without such a connection, i.e. after the drawings have been uploaded.

An embodiment relates to an aforementioned method, wherein, when the mixed reality device is worn, or configured to be worn, by the crew member, audio-visual instructions, such as provided by an external human instructor, are displayed or made audible by the mixed reality device. Crew members are normally less trained in deck marking than port captains. When the mixed reality device is thus worn by a less well-trained crew member, the crew member can still perform the deck marking in a satisfactory way, thanks to the audio-visual instructions, for instance provided (preferably in real-time) by the external human instructor.

An embodiment relates to an aforementioned method, wherein a spatial reach of the mixed reality device is about 15 - 20 m, preferably is about 16 - 19 m, more preferably is about 17 m. In order to speed up the rendering and displaying of the projection during the deck marking process, the spatial reach is preferably to be adapted to the viewing distance which provides the crew member or port captain with sufficient spatial information to carry out the deck marking process, but, on the other hand, not so much spatial information that the mixed reality device is slowed down unnecessarily. Thus, the method will again be less time-consuming.

An embodiment relates to an aforementioned method, wherein only part of the spatial reach of the mixed reality device is projected on the surface and shown to the wearer of the mixed reality device on the viewing screen. Again, by showing only part of the spatial reach, a significant speed gain is achieved, again making the visualization process less time-consuming.

An embodiment relates to an aforementioned method, wherein only 20 - 50%, such as 30 - 40%, such as around 33%, of the spatial reach of the mixed reality device is projected on the surface and shown to the wearer of the mixed reality device on the viewing screen. The Applicant has found that the above numbers in practice surprisingly provide the wearer of the mixed reality device with sufficient spatial information to keep his or her spatial awareness, without requiring unnecessarily large amounts of processing power.

An embodiment relates to an aforementioned method, wherein the mixed reality device is integrated in, or worn underneath, a helmet of the wearer. Thus, the mixed reality device cannot be forgotten by the crew member or the port captain when he or she puts the helmet on. Furthermore, the mixed reality device is thus protected from damage, as well as from environmental factors.

An embodiment relates to an aforementioned method, comprising the step of anchoring the projected 2D drawing to the surface, wherein the projected 2D drawing is invisible when the wearer turns the mixed reality device away from the physical surface area corresponding with a drawing area of the projected 2D drawing, but becomes visible again when the wearer again turns the mixed reality device towards the physical surface area corresponding with the drawing area of the projected 2D drawing. Thus, the amount of processing power needed is again reduced, leading to further reductions in time needed to complete the visualization.

An embodiment relates to an aforementioned method, wherein the technical drawing has a resolution of at most 10 mm, preferably at most 5 mm. The Applicant has found that in practice, and in particular with deck marking, an accuracy of at least 10 mm is required to obtain accurate visualizations.

An embodiment relates to an aforementioned method, comprising measuring dimensions of the physical surface with the mixed reality device, allowing the wearer to check the dimensions of the projected 2D technical drawing elements and/or physical surface elements.

An embodiment relates to an aforementioned method, wherein the audio-visual instructions are tailored to progress being made by the wearer with the drawing of characteristic lines and reference points of the virtual footprint of the one or more loads on the deck surface and/or hold surface, to further decrease time-consumption and to further increase efficiency.

An embodiment relates to an aforementioned method, wherein the progress is being monitored from another location, i.e. a location different from the location of the mixed reality device. Thus, the person monitoring the progress does not have to be at the same location.

Another aspect of the invention relates to a computer-readable medium according to claim 13.

Another aspect of the invention relates to a mixed reality device comprising an aforementioned computer-readable medium.

Yet another aspect of the invention relates to a helmet, or similar, to-be-worn safety gear, comprising an aforementioned mixed reality device, or a helmet or similar, to-be-worn safety gear, integrated with an aforementioned mixed reality device. Thus, as mentioned in the foregoing, the mixed reality device is then protected from damage, as well as from environmental factors, such as rain, wind, heat, et cetera.

### BRIEF DESCRIPTION OF THE DRAWINGS

The present invention will be explained hereafter with reference to exemplary embodiments of the method, the mixed reality device and the helmet according to the invention and with reference to the drawings. Therein:

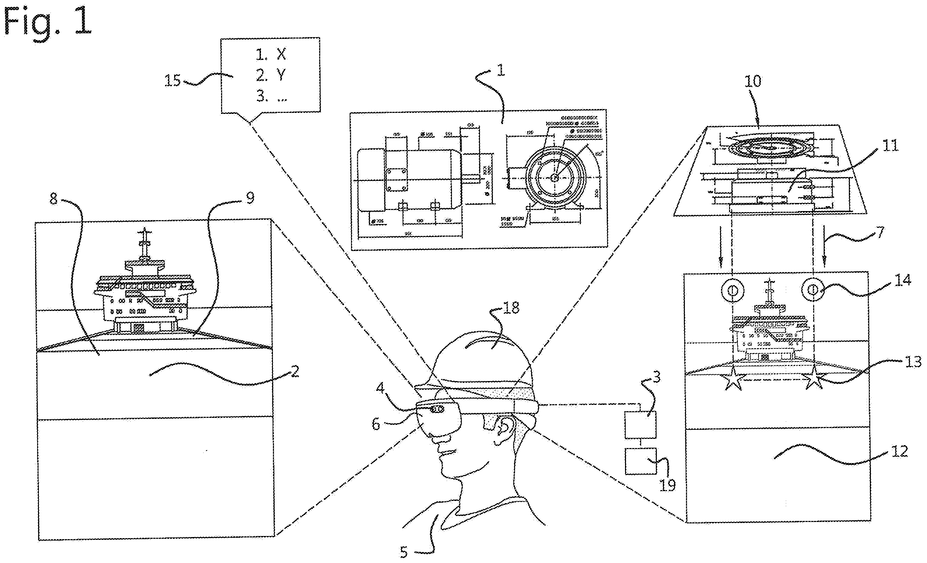

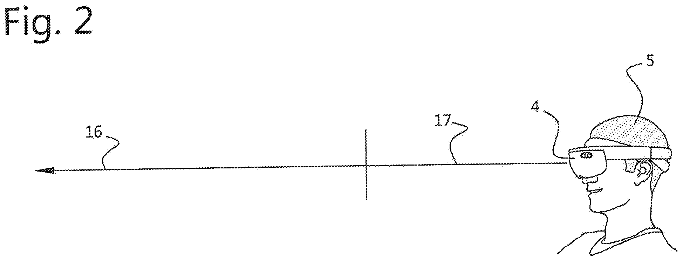

Figure 1 shows a schematic view of exemplary embodiments of the method, the mixed reality device and the helmet according to the invention; and Figure 2 shows a schematic side view of the spatial reach of the mixed reality device according to the invention.

### DETAILED DESCRIPTION

Figures 1 and 2 will be discussed in conjunction. Figure 1 shows an exemplary embodiment of a method for visualizing a 2D technical drawing 1 on a physical surface 2. According to the invention, a 2D technical drawing is uploaded to a computer-readable memory or medium 3 of a mixed reality device 4. The wearer 5, such as a crew member 14 of the vessel 9 or a port captain 14, of the mixed reality device 4, such as a Microsoft HoloLens, is allowed to view the physical surface 2 through a viewing screen 6 of the mixed reality device 4. The viewing screen 6 usually comprises a pair of glasses or the like upon which an image can be displayed or projected. The mixed reality device 4 is then instructed to display the 2D technical drawing 1 on the viewing screen 6 in such a way, that the wearer 5 of the mixed reality device 4 sees (i.e. forms an image in his mind of) the physical surface 2 with the 2D technical drawing 1 being orthographically projected 7 on the physical surface 2. Other types of projections are conceivable, such as isometric projections, but such projections will be less or hardly meaningful to the wearer 5.

The 2D technical drawing 1, such as a CAD drawing, may comprise a deck 8 of a vessel 9 as shown. Preferably, the physical surface 2 is a substantially horizontal surface, such as a vessel deck surface 8, such as an upper deck surface (and/or hold surface, which is not shown for clarity), or the like. The 2D technical drawing 1 comprises a 2D technical drawing 1 comprising a virtual footprint 10 of one or more loads 11 to be transported on the deck 8 of the vessel 9. The virtual footprint 10 of the one or more loads 11 is then displayed on the viewing screen 6 in such a way, that the wearer 5 of the mixed reality device 4 sees the deck surface 8 with the virtual footprint 10 of the one or more loads 11 being orthographically projected onto the physical surface 2. The one or more loads 11 may comprise heavy and large loads, such as wind turbine parts, offshore platform parts, et cetera. The wearer 5 of the mixed reality device 4 is then enabled to draw characteristic lines 12 and reference points 13 of the virtual footprint 10 of the one or more loads 11 on the actual, physical deck surface 8 (i.e. not on the 'virtual' deck surface).

Preferably, at least two physical marker elements 14 are arranged on the physical surface 2, such as a coloured plate, or a similar visually easily recognizable object, preferably by the wearer 5 of the mixed reality device 4, corresponding with at least two associated virtual reference points 13 of the 2D drawing 1. Thus, the 2D technical drawing 1 can be more easily projected on the viewing screen 6 with correct positioning and orientation with respect to the physical surface 2.

When the mixed reality device 4 is worn by the crew member 14, audio-visual instructions 15, such as provided by an external human instructor, are displayed (on the viewing screen 6) or made audible by the mixed reality device 4 via a speaker, such as an speaker integrated with the mixed reality device 4 or a speaker integrated in the helmet 18. Such audio-visual instructions 15 or directions may be tailored to the progress being made by the crew member or port captain with the deck marking process. Therein, it also conceivable that such progress is being monitored from another location, i.e. a location different from the mixed reality device 4.

As shown in figure 2, a spatial reach 16 of the mixed reality device is about 15 - 20 m, preferably is about 16 - 19 m, more preferably is about 17 m. Preferably, only part 17 of the spatial reach 16 of the mixed reality device 4 is projected on the surface 2 and shown to the wearer 5 of the mixed reality device 4 on the viewing screen 6, such as only 20 - 50%, such as 30 - 40%, such as around 33%, of the spatial reach 16 of the mixed reality device 4 is projected on the surface 2 and shown to the wearer 5 of the mixed reality device 4 on the viewing screen 6. Analogously, the spatial reach 16 or spatial environment (i.e. the projection of the 2D technical drawing 1) may be subdivided in rectangular or square areas, wherein only certain rectangular or square areas, such as deck surface 8 areas relatively close to the wearer 5, are shown on the viewing screen 6 to reduce required processing power.

As shown in figure 1, the mixed reality device 4 is preferably integrated in, or worn underneath, a helmet 18 of the wearer 5, such as the helmet 18 of the crew member or port captain 14.

Preferably, the method also comprising the step of anchoring the projected 2D drawing 1 to the surface 2. This means that the projected 2D drawing 1 is invisible when the wearer 5 turns the mixed reality device 4 away from the physical surface 2 area corresponding with a drawing area of the projected 2D drawing 1, but becomes visible again when the wearer 5 again turns the mixed reality device 4 towards the physical surface area 2 corresponding with the drawing area of the projected 2D drawing 1.

Preferably, the 2D technical drawing 1 has a resolution of at most 10 mm, more preferably at most 5 mm, to allow for accurate projection of the 2D technical drawing 1 on the physical surface 2.

Figure 1 also schematically shows a computer-readable medium 3, comprising software instructions for carrying out the method for visualizing a 2D technical drawing 1 on a physical surface 2, the software instructions, when carried out by a computer processor 19, comprising functionality for:
- uploading a 2D technical drawing 1 to a computer-readable memory or medium 3 of a mixed reality device 4,
- allowing a wearer 5 of the mixed reality device 4 to view the physical surface 2 through a viewing screen 6 of the mixed reality device 4,
- instructing the mixed reality device 4 to display the 2D technical drawing 1 on the viewing screen 6 in such a way, that the wearer 5 of the mixed reality device 4 sees the physical surface 2 through the viewing screen 6 with the 2D technical drawing 1 being orthographically projected 7 on the viewing screen 6.

It should be clear that the description above is intended to illustrate the operation of preferred embodiments of the invention, and not to reduce the scope of protection of the invention. Starting from the above description, many embodiments will be conceivable to the skilled person within the inventive concept and scope of protection of the present invention as defined by the appended claims. For instance, the mixed reality device(s) mentioned above could be used by multiple persons at the same time.

## Claims

1. Method for deck marking of a vessel (9), comprising:
- visualizing a 2D technical drawing (1) on a physical surface (2) being a deck (8) and/or hold of a vessel (9), wherein the 2D drawing is a technical drawing comprising a virtual footprint (10) of the one or more loads (11) to be transported on the deck and/or in the hold of the vessel, comprising:
uploading the 2D technical drawing comprising the virtual footprint (10) of the one or more loads (11) to a computer-readable memory or medium (3) of a mixed reality device (4),
allowing a wearer (5) of the mixed reality device to view the physical surface through a viewing screen (6) of the mixed reality device,
instructing the mixed reality device to display the 2D technical drawing comprising the virtual footprint (10) of the one or more loads (11) on the viewing screen in such a way, that the wearer of the mixed reality device sees the physical surface with the 2D technical drawing comprising the virtual footprint (10) of the one or more loads (11) being orthographically projected (7) thereon,
- drawing characteristic lines (12) and reference points (13) of the virtual footprint of the one or more loads on the deck surface and/or hold surface, such that the one or more loads can be arranged on the deck and/or in the hold of the vessel according to the virtual footprint.

2. Method according to claim 1, wherein the physical surface is a substantially horizontal surface.

3. Method according to claim 1 or claim 2, wherein at least two physical marker elements (14) are arranged on the physical surface, preferably by the wearer of the mixed reality device, corresponding with at least two associated virtual reference points (13) of the 2D drawing, in order to orthographically project the 2D drawing on the viewing screen with correct positioning and orientation with respect to the physical surface.

4. Method according to any one of the preceding claims, wherein the mixed reality device is worn by a crew member (14) of the vessel or a port captain (14).

5. Method according to claim 4, wherein, when the mixed reality device is worn by the crew member, audio-visual instructions (15), such as provided by an external human instructor, are displayed or made audible by the mixed reality device.

6. Method according to any one of the preceding claims, wherein a spatial reach (16) of the mixed reality device is about 15 - 20 m, preferably is about 16 - 19 m, more preferably is about 17 m, wherein preferably only part (17) of the spatial reach of the mixed reality device is projected on the surface and shown to the wearer of the mixed reality device on the viewing screen, wherein for instance only 20 - 50%, such as 30 - 40%, such as around 33%, of the spatial reach of the mixed reality device is projected on the surface and shown to the wearer of the mixed reality device on the viewing screen.

7. Method according to any one of the preceding claims, wherein the mixed reality device is integrated in, or worn underneath, a helmet (18) of the wearer.

8. Method according to any one of the preceding claims, comprising the step of anchoring the projected 2D drawing to the surface, wherein the projected 2D drawing is invisible when the wearer turns the mixed reality device away from the physical surface area corresponding with a drawing area of the projected 2D drawing, but becomes visible again when the wearer again turns the mixed reality device towards the physical surface area corresponding with the drawing area of the projected 2D drawing.

9. Method according to any one of the preceding claims, wherein the 2D technical drawing has a resolution of at most 10 mm.

10. Method according to any one of the preceding claims, comprising measuring dimensions of the physical surface with the mixed reality device.

11. Method according to claim 5, wherein the audio-visual instructions are tailored to progress being made by the wearer with the drawing of characteristic lines and reference points of the virtual footprint of the one or more loads on the deck surface and/or hold surface.

12. Method according to claim 11, wherein the progress is being monitored from another location, i.e. a location different from the location of the mixed reality device.

13. Computer-readable medium (3), comprising software instructions for carrying out a method for deck marking, such as the method according to any one of the claims 1-12, the software instructions, when carried out by a computer processor (19), comprising functionality for:
- visualizing a 2D technical drawing (1) on a physical surface (2) being a deck (8) and/or hold of a vessel (9), wherein the 2D drawing is a technical drawing comprising a virtual footprint (10) of the one or more loads (11) to be transported on the deck and/or in the hold of the vessel, comprising:
uploading the 2D technical drawing comprising the virtual footprint (10) of the one or more loads (11) to be transported on the deck and/or in the hold of the vessel to a computer-readable memory or medium (3) of a mixed reality device (4),
allowing a wearer (5) of the mixed reality device to view the physical surface through a viewing screen (6) of the mixed reality device,
instructing the mixed reality device to display the 2D technical drawing comprising the virtual footprint (10) of the one or more loads (11) on the viewing screen in such a way, that the wearer of the mixed reality device sees the physical surface with the 2D technical drawing comprising the virtual footprint (10) of the one or more loads (11) being orthographically projected (7) thereon,
- enabling the wearer of the mixed reality device to draw characteristic lines (12) and reference points (13) of the virtual footprint of the one or more loads on the deck surface and/or hold surface, such that the one or more loads can be arranged on the deck and/or in the hold of the vessel according to the virtual footprint.

14. Mixed reality device (4) comprising a computer-readable medium (3) according to claim 13.

15. Helmet (18), comprising a mixed reality device according to claim 14, or integrated with a mixed reality device according to claim 14.

## Patentansprüche

1. Verfahren zum Markieren eines Decks eines Schiffs (9), Folgendes umfassend:
- Visualisieren einer technischen 2D-Zeichnung (1) auf einer physischen Oberfläche (2), die ein Deck (8) und/oder ein Laderaum eines Schiffs (9) ist, wobei die 2D-Zeichnung eine technische Zeichnung ist, die eine virtuelle Standfläche (10) der einen oder mehreren Ladungen (11) umfasst, die auf dem Deck und/oder in dem Laderaum des Schiffs zu transportieren sind, Folgendes umfassend:
Hochladen der technischen 2D-Zeichnung, welche die virtuelle Standfläche (10) der einen oder mehreren Ladungen (11) umfasst, in einen computerlesbaren Speicher oder ein computerlesbares Medium (3) einer Vorrichtung für gemischte Realität (4),
Ermöglichen, dass ein Träger (5) der Vorrichtung für gemischte Realität die physische Oberfläche durch einen Betrachtungsbildschirm (6) der Vorrichtung für gemischte Realität betrachten kann,
Anweisen der Vorrichtung für gemischte Realität, die technische 2D-Zeichnung, welche die virtuelle Standfläche (10) der einen oder mehreren Ladungen (11) umfasst, derart auf dem Betrachtungsbildschirm anzuzeigen, dass der Träger der Vorrichtung für gemischte Realität die physische Oberfläche mit der rechtwinklig darauf projizierten (7) technischen 2D-Zeichnung sieht, welche die virtuelle Standfläche (10) der einen oder mehreren Ladungen (11) umfasst,
- Einzeichnen von charakteristischen Linien (12) und Referenzpunkten (13) der virtuellen Standfläche der einen oder mehreren Ladungen auf der Deckoberfläche oder der Laderaumoberfläche des Schiffs gemäß der virtuellen Standfläche.

2. Verfahren nach Anspruch 1, wobei die physische Oberfläche eine im Wesentlichen horizontale Oberfläche ist.

3. Verfahren nach Anspruch 1 oder 2, wobei auf der physischen Oberfläche mindestens zwei physische Markierungselemente (14) angeordnet werden, vorzugsweise durch den Träger der Vorrichtung für gemischte Realität, entsprechend mindestens zwei zugehörigen virtuellen Referenzpunkten (13) der 2D-Zeichnung, um die 2D-Zeichnung mit korrekter Positionierung und Ausrichtung hinsichtlich der physischen Oberfläche rechtwinklig auf den Betrachtungsbildschirm zu projizieren.

4. Verfahren nach einem der vorhergehenden Ansprüche, wobei die Vorrichtung für gemischte Realität von einem Crew-Mitglied (14) des Schiffs oder einem Hafenkapitän (14) getragen wird.

5. Verfahren nach Anspruch 4, wobei, wenn die Vorrichtung für gemischte Realität von einem Crew-Mitglied getragen wird, durch die Vorrichtung für gemischte Realität audiovisuelle Anweisungen (15), wie sie beispielsweise durch einen externen menschlichen Anweisenden bereitgestellt werden, angezeigt oder hörbar gemacht werden.

6. Verfahren nach einem der vorhergehenden Ansprüche, wobei eine räumliche Reichweite (16) der Vorrichtung für gemischte Realität etwa 15 bis 20 m, bevorzugt etwa 16 bis 19 m, bevorzugter etwa 17 m, beträgt, wobei vorzugsweise nur ein Teil (17) der räumlichen Reichweite der Vorrichtung für gemischte Realität auf die Oberfläche projiziert und dem Träger der Vorrichtung für gemischte Realität auf dem Anzeigebildschirm gezeigt wird, wobei zum Beispiel nur 20 bis 50 %, wie beispielsweise 30 bis 40 %, wie beispielsweise ungefähr 33 % der räumlichen Reichweite der Vorrichtung für gemischte Realität auf die Oberfläche projiziert und dem Träger der Vorrichtung für gemischte Realität auf dem Anzeigebildschirm gezeigt werden.

7. Verfahren nach einem der vorhergehenden Ansprüche, wobei die Vorrichtung für gemischte Realität in einen Helm (18) der Trägers integriert ist oder unter diesem getragen wird.

8. Verfahren nach einem der vorhergehenden Ansprüche, den Schritt des Verankerns der projizierten 2D-Zeichnung auf der Oberfläche umfassend, wobei die projizierte 2D-Zeichnung nicht sichtbar ist, wenn sich der Träger der Vorrichtung für gemischte Realität von dem Bereich der physischen Oberfläche, der einem Zeichnungsbereich der projizierten 2D-Zeichnung entspricht, weg dreht, aber sichtbar wird, wenn sich der Träger die Vorrichtung für gemischte Realität wieder zu dem Bereich der physischen Oberfläche, der dem Zeichnungsbereich der projizierten 2D-Zeichnung entspricht, hin dreht.

9. Verfahren nach einem der vorhergehenden Ansprüche, wobei die technische 2D-Zeichnung eine Auflösung von höchstens 10 mm aufweist.

10. Verfahren nach einem der vorhergehenden Ansprüche, das Messen von Abmessungen der physischen Oberfläche mit der Vorrichtung für gemischte Realität umfassend.

11. Verfahren nach Anspruch 5, wobei die audiovisuellen Anweisungen speziell an einen Fortschritt angepasst sind, den der Träger mit dem Zeichnen von charakteristischen Linien und Referenzpunkten der virtuellen Standfläche der einen oder mehreren Ladungen auf der Deckoberfläche und/oder der Laderaumoberfläche macht.

12. Verfahren nach Anspruch 11, wobei der Fortschritt von einem anderen Standort überwacht wird, d. h. einem Standort, der sich von dem Standort der Vorrichtung für gemischte Realität unterscheidet.

13. Computerlesbares Medium (3), Software-Anweisungen zum Ausführen eines Verfahrens zur Deckmarkierung wie beispielsweise das Verfahren nach einem der Ansprüche 1 bis 12 umfassend, wobei die Software-Anweisungen, wenn sie von einem Computerprozessor ausgeführt werden, Funktionalität für Folgendes umfassen:
- Visualisieren einer technischen 2D-Zeichnung (1) auf einer physischen Oberfläche (2), die ein Deck (8) und/oder ein Laderaum eines Schiffs (9) ist, wobei die 2D-Zeichnung eine technische Zeichnung ist, die eine virtuelle Standfläche (10) der einen oder mehreren Ladungen (11) umfasst, auf dem Deck und/oder in dem Laderaum des Schiffs zu transportieren sind, Folgendes umfassend:
Hochladen der technischen 2D-Zeichnung, welche die virtuelle Standfläche (10) der einen oder mehreren Ladungen (11) umfasst, die auf dem Deck und/oder in dem Laderaum des Schiffs zu transportieren sind, in einen computerlesbaren Speicher oder ein computerlesbares Medium (3) einer Vorrichtung für gemischte Realität (4),
Ermöglichen, dass ein Träger (5) der Vorrichtung für gemischte Realität die physische Oberfläche durch einen Betrachtungsbildschirm (6) der Vorrichtung für gemischte Realität betrachten kann,
Anweisen der Vorrichtung für gemischte Realität, die technische 2D-Zeichnung, welche die virtuelle Standfläche (10) der einen oder mehreren Ladungen (11) umfasst, derart auf dem Betrachtungsbildschirm anzuzeigen, dass der Träger der Vorrichtung für gemischte Realität die physische Oberfläche mit der rechtwinklig darauf projizierten (7) technischen 2D-Zeichnung sieht, welche die virtuelle Standfläche (10) der einen oder mehreren Ladungen (11) umfasst,
- Ermöglichen, dass der Träger der Vorrichtung für gemischte Realität charakteristische Linien (12) und Referenzpunkte (13) der virtuellen Standfläche der einen oder mehreren Ladungen auf der Deckoberfläche oder der Laderaumoberfläche des Schiffs einzeichnen kann, so dass die eine oder die mehreren Ladungen auf dem Deck und/oder in dem Laderaum des Schiffs angeordnet werden können.

14. Vorrichtung für gemischte Realität (4), ein computerlesbares Medium (3) nach Anspruch 13 umfassend.

15. Helm (18), der eine Vorrichtung für gemischte Realität nach Anspruch 14 umfasst oder in den eine Vorrichtung für gemischte Realität nach Anspruch 14 integriert ist.

## Revendications

1. Procédé de marquage de pont d'un navire (9), comprenant :
- la visualisation d'un dessin technique 2D (1) sur une surface physique (2) qui est un pont (8) et/ou une cale d'un navire (9), où le dessin 2D est un dessin technique comprenant une empreinte virtuelle (10) de la ou des plusieurs charges (11) à transporter sur le pont et/ou dans la cale du navire, comprenant :
le téléchargement du dessin technique 2D comprenant l'empreinte virtuelle (10) de la ou des plusieurs charges (11) sur une mémoire ou un support lisible par ordinateur (3) d'un dispositif de réalité mixte (4),
l'autorisation, à un porteur (5) du dispositif de réalité mixte, de visualiser la surface physique à travers un écran de visualisation (6) du dispositif de réalité mixte,
l'émission d'une instruction au dispositif de réalité mixte pour afficher le dessin technique 2D comprenant l'empreinte virtuelle (10) de la ou des plusieurs charges (11) sur l'écran de visualisation de sorte que le porteur du dispositif de réalité mixte voie la surface physique avec le dessin technique 2D comprenant l'empreinte virtuelle (10) de la ou des plusieurs charges (11) projeté orthographiquement (7) sur celle-ci,
- le traçage de lignes caractéristiques (12) et de points de référence (13) de l'empreinte virtuelle de la ou des plusieurs charges sur la surface de pont et/ou la surface de cale, de sorte que la ou les plusieurs charges puissent être agencées sur le pont et/ou dans la cale du navire selon l'empreinte virtuelle.

2. Procédé selon la revendication 1, dans lequel la surface physique est une surface sensiblement horizontale.

3. Procédé selon la revendication 1 ou la revendication 2, dans lequel au moins deux éléments marqueurs physiques (14) sont agencés sur la surface physique, de préférence par le porteur du dispositif de réalité mixte, correspondant à au moins deux points de référence virtuels associés (13) du dessin 2D, afin de projeter orthographiquement le dessin 2D sur l'écran de visualisation avec un positionnement et une orientation corrects par rapport à la surface physique.

4. Procédé selon l'une quelconque des revendications précédentes, dans lequel le dispositif de réalité mixte est porté par un membre d'équipage (14) du navire ou un capitaine de port (14).

5. Procédé selon la revendication 4, dans lequel, lorsque le dispositif de réalité mixte est porté par le membre d'équipage, des instructions audiovisuelles (15), telles que fournies par un instructeur humain externe, sont affichées ou rendues audibles par le dispositif de réalité mixte.

6. Procédé selon l'une quelconque des revendications précédentes, dans lequel une portée spatiale (16) du dispositif de réalité mixte est comprise entre environ 15 et 20 m, de préférence entre environ 16 et 19 m, plus préférablement est d'environ 17 m, où de préférence seulement une partie (17) de la portée spatiale du dispositif de réalité mixte est projetée sur la surface et montrée au porteur du dispositif de réalité mixte sur l'écran de visualisation, où par exemple seulement 20 à 50%, tels que 30 à 40%, tels que environ 33%, de la portée spatiale du dispositif de réalité mixte sont projetés sur la surface et montrés au porteur du dispositif de réalité mixte sur l'écran de visualisation.

7. Procédé selon l'une quelconque des revendications précédentes, dans lequel le dispositif de réalité mixte est intégré dans, ou porté sous, un casque (18) du porteur.

8. Procédé selon l'une quelconque des revendications précédentes, comprenant l'étape d'ancrage du dessin 2D projeté sur la surface, où le dessin 2D projeté est invisible lorsque le porteur éloigne le dispositif de réalité mixte de la zone de surface physique correspondant à une zone de traçage du dessin 2D projeté, mais redevient visible lorsque le porteur tourne à nouveau le dispositif de réalité mixte vers la zone de surface physique correspondant à la zone de traçage du dessin 2D projeté.

9. Procédé selon l'une quelconque des revendications précédentes, dans lequel le dessin technique 2D a une résolution d'au plus 10 mm.

10. Procédé selon l'une quelconque des revendications précédentes, comprenant la mesure de dimensions de la surface physique avec le dispositif de réalité mixte.

11. Procédé selon la revendication 5, dans lequel les instructions audiovisuelles sont adaptées à l'avancement réalisé par le porteur dans le traçage de lignes caractéristiques et de points de référence de l'empreinte virtuelle de la ou des plusieurs charges sur la surface de pont et/ou la surface de cale.

12. Procédé selon la revendication 11, dans lequel le progrès est surveillé depuis un autre emplacement, c'est-à-dire un emplacement différent de l'emplacement du dispositif de réalité mixte.

13. Support lisible par ordinateur (3), comprenant des instructions logicielles pour réaliser un procédé de marquage de pont, tel que le procédé selon l'une quelconque des revendications 1 à 12, les instructions logicielles, lorsqu'elles sont exécutées par un processeur informatique (19), comprenant une fonctionnalité pour :
- visualiser un dessin technique 2D (1) sur une surface physique (2) qui est un pont (8) et/ou une cale d'un navire (9), où le dessin 2D est un dessin technique comprenant une empreinte virtuelle (10) de la ou des plusieurs charges (11) à transporter sur le pont et/ou dans la cale du navire, comprenant :
le téléchargement du dessin technique 2D comprenant l'empreinte virtuelle (10) de la ou des plusieurs charges (11) à transporter sur le pont et/ou dans la cale du navire sur une mémoire ou un support lisible par ordinateur (3) d'un dispositif de réalité mixte (4),
l'autorisation, à un porteur (5) du dispositif de réalité mixte, de visualiser la surface physique à travers un écran de visualisation (6) du dispositif de réalité mixte,
l'émission d'une instruction au dispositif de réalité mixte pour afficher le dessin technique 2D comprenant l'empreinte virtuelle (10) de la ou des plusieurs charges (11) sur l'écran de visualisation de sorte que le porteur du dispositif de réalité mixte voie la surface physique avec le dessin technique 2D comprenant l'empreinte virtuelle (10) de la ou des plusieurs charges (11) projeté orthographiquement (7) sur celle-ci,
- permettre au porteur du dispositif de réalité mixte de tracer des lignes caractéristiques (12) et des points de référence (13) de l'empreinte virtuelle de la ou des plusieurs charges sur la surface de pont et/ou la surface de cale, de sorte que la ou les plusieurs charges puissent être agencées sur le pont et/ou dans la cale du navire selon l'empreinte virtuelle.

14. Dispositif de réalité mixte (4) comprenant un support lisible par ordinateur (3) selon la revendication 13.

15. Casque (18), comprenant un dispositif de réalité mixte selon la revendication 14, ou intégré à un dispositif de réalité mixte selon la revendication 14.
